# EUROPÄISCHE PATENTSCHRIFT

(11) **EP 1 487 275 B1**
(45) Veröffentlichungstag und Bekanntmachung des Hinweises auf die Patenterteilung: **16.04.2008**
(21) Anmeldenummer: 03704584.6
(22) Anmeldetag: 10.02.2003
(51) Int. Cl.: A21B 3/04, A47J 27/04

(54) **DAMPFGARER UND ANORDNUNG ZUM DAMPFGAREN**
STEAM COOKER AND ARRANGEMENT FOR STEAM COOKING
CUISEUR A VAPEUR ET SYSTEME DE CUISSON A LA VAPEUR

(30) Priorität: 18.02.2002 DE 10206690
(43) Veröffentlichungstag der Anmeldung: 22.12.2004
(60) Teilanmeldung: 08002366.6
(73) Patentinhaber: BSH Bosch und Siemens Hausgeräte GmbH, 81739 München (DE)
(72) Erfinder: ERDMANN, Klaus, New Bern, NC 28562 (US); GÖTZ, Bernhard, 75059 Zaisenhausen (DE); HERBOLSHEIMER, Jochen, 75015 Bretten (DE); RANZENBERGER, Barbara, Bretten 75015 (DE)
(74) Vertreter: Grünecker, Kinkeldey, Stockmair & Schwanhäusser Anwaltssozietät
(86) Internationale Anmeldenummer: PCT/EP2003/001310
(87) Internationale Veröffentlichungsnummer: WO 2003/069062

(56) Entgegenhaltungen:
- EP-A- 0 556 166
- EP-A- 0 824 863
- DE-A- 3 207 680
- DE-A- 3 404 543
- FR-A- 2 682 461
- US-A- 1 934 125
- US-A- 3 972 318
- US-A- 5 938 959

## Beschreibung

Das Verfahren betrifft einen Dampfgarer und eine Anordnung zum Dampfgaren. Aus der EP 0 556 166 B1 ist ein gattungsgemäßer Dampfgarer zum Garen von Gargut in einem speziell eingerichteten Dampfofen bekannt. Dieser Dampfofen weist eine Ofenmuffel auf, auf deren Boden eine Heizvorrichtung vorgesehen ist und die zusätzlich einen Wassertank besitzt Zum Dampfgaren wird ein als geschlossenes Garbehältnis ausgebildeter Dampfgarer, in dem das Gargut auf einem Dampfeinsatz angeordnet ist, mit seinem Unterteil, das als Wasservorratsbehälter dient, auf die Heizeinrichtung der Ofenmuffel aufgesetzt, wobei das Unterteil an den Wassertank angeschlossen wird. Durch Aufheizen des Unterteils des Garbehältnisses mit Hilfe der Heizeinrichtung wird Dampf erzeugt, der infolge seines Auftriebs nach oben steigt und dabei das Dampfgut auf dem Dampfeinsatz umströmt, um dieses zu garen. Der Dampf kondensiert dann teilweise an der kälteren Oberfläche des Gargutes bzw. an der Oberseite des Garbehältnisses, wobei das Kondensat in das Unterteil zurücktropft. Da das Garbehältnis nicht vollständig dicht ist, entweicht aber ein großer Teil des Dampfes in die Ofenmuffel. Ein Nachteil dieser Auslegung des Dampfgarers ist, dass für den Dampfvorgang ein speziell eingerichteter Dampfofen mit einer freiliegenden Heizeinrichtung benötigt wird, auf das das Garbehältnis zum Dampfgaren direkt aufgesetzt wird. Weiterhin ist die Handhabung aufwändig, da das Garbehältnis manuell an den Wassertank im Dampfofen angeschlossen werden muss, um eine ausreichende Bevorratung mit Wasser für den Garvorgang zu gewährleisten.

Aus der EP 165187 B1 ist ein weiterer Dampfgarer mit einem geschlossenen Garbehältnis zur Aufnahme von Gargut bekannt, bei dem das Garbehältnis in eine durch eine Zugangstür verschließbare heizbare Ofenmuffel eingeschoben und das Garbehältnis zugleich an eine außerhalb dieser Ofenmuffel angeordnete Dampferzeugungseinrichtung angeschlossen wird. Die Ofenmuffel mit dem Garbehältnis wird in einer Aufheizphase auf eine Temperatur von wenigstens 100° C aufgeheizt, wodurch ein Kondensieren des anschließend von der Dampferzeugungseinnchtung zum Dampfgaren eingeblasenen Dampfes verhindert wird. Auch bei dieser Auslegung des Dampfgarers ist wiederum ein spezieller Dampfofen mit einer externen Dampferzeugungseinrichtung notwendig, um den Dampferzeugungsvorgang auszuführen.

In der GM 77 03 401 ist außerdem ein Dampfgarer mit einem aus einem Untertopf und einem Deckel gebildeten Garbehältnis beschrieben, in der ein Dampfeinsatz zur Aufnahme des Garguts angeordnet ist, wobei zum Dampfgaren extern erzeugter Dampf in mindestens eine Eintrittsöffnung in den Deckel eingeblasen und aus mindestens einer Kondensatöffnung im Behälterboden abgezogen wird, so dass der Dampf das Gargut von oben nach unten zwangsweise durchströmt.

Aus der DE 37 14 323 A1 ist weiterhin ein Dampfgarer für Mikrowellenherde bekannt, der aus einem einen Wasservorrat enthaltenden Behältnis, in dem ein mit Dampfdurchlässen versehener mikrowellenundurchlässiger Dampfeinsatz eingesetzt ist, und aus einem ebenfalls mikrowellenundurchlässigen Deckel besteht. Beim Dampfgaren wird das Wasser im Behälter des Dampfgarers mit Hilfe der Mikrowellen im Mikrowellenofen erhitzt, durchströmt das Gargut auf dem Dampfeinsatz und wird anschließend über einen Druck-auslassdeckel in den Mikrowellenofen abgeführt.

Aus der EP0824863 ist ein Dampfgarer bekannt, der ein Wannenteil aufweist, das am Boden rillenartige Vertiefungen für die Wasseraufnahme aufweist. Wenn dieser Dampfgarer in eine Ofenmuffel eingesetzt wird, steht er mit diesen Rillen auf dem Boden des Garraums auf.

Aus der DE 3404543 ist ein Gerätesystem mit Mehrzeckverwendungsmöglichkeit bekannt, das eine Wanne umfasst, die in seitliche Aufnahmen einer Ofenmuffel eingeschoben werden kann. Zusammen mit einem Deckel kann diese Wanne insbesondere als Bräter verwendet werden.

Aufgabe der Erfindung ist es, einen Dampfgarer sowie eine Anordnung und eine Vorrichtung zum Dampfgaren bereit zu stellen, die einen einfach zu handhabenden Dampfgarvorgang in einem herkömmlichen Backofen ermöglichen.

Diese Aufgabe wird mit einem Dampfgarer nach Anspruch 1, einer Anordnung nach Anspruch 9 gelöst. Bevorzugte Weiterbildungen sind in den abhängigen Ansprüchen angegeben.

Der erfindungsgemäße Dampfgarer zum Dampfgaren von Gargut in einem herkömmlichen Backofen mit einer Heizeinrichtung im Bodenbereich zeichnet sich durch ein wärmeleitendes Wannenteil zur Aufnahme eines Flüssigkeitsvorrats aus, auf dem ein Dampfeinsatz zur Aufnahme von Gargut angeordnet ist, das von dem aus dem Flüssigkeitsvorrat im Wannenteil erzeugten Dampf umströmt wird, um dampfgegart zu werden. Das Wannenteil des Dampfgarers ist dabei mit einer Halte- oder Beabstandungseinrichtung versehen, um das Wann enteil vom Boden des Backofens und damit der Heizeinrichtung beabstandet anzuordnen. Durch diese Auslegung ist es möglich, den Dampfgarvorgang in einem herkömmlichen Standard-Heizeinrichtung unter dem Backofenboden auszuführen, da durch die vom Backofen beabstandete Anordnung gewährleistet wird, dass am Boden des Backofens kein Hitzestau auftritt, der sich ergeben würde, wenn der Dampfgarer direkt aufgesetzt wird, was dann zu einem Beschädigen des Backofens führen könnte. Besonders vorteilhaft ist es, dass der Dampfgarer keine Füße aufweist, sondern in an den Seitenwänden vorgesehenen Halteeinrichtungen gehaltert ist, wobei das Wannenteil so ausgelegt ist, dass der Backofen dabei im Wesentlichen in zwei voneinander getrennte Raumbereiche unterteilt wird.

Die Auslegung des Wannenteils zur Unterteilung des Garraumes des Backofens in zwei im wesentlichen voneinander getrennte übereinander angeordnete Raumbereiche, sorgt weiterhin dafür, dass sich beim Dampfgarvorgang, der durch die Heizeinrichtung im Backofenboden bewirkt wird, ein Temperaturgefälle in der Ofenmuffel zwischen dem oberen Bereich und dem unteren Bereich ergibt, so dass der im Wannenteil erzeugte Dampf, der das Gargut umströmt, im oberen Bereich kondensiert, um dann in den Flüssigkeitsvorrat im Wannenteil zurückgeführt zu werden. Hierdurch wird gewährleistet, dass im Backofen kein zusätzlicher Wassertank bzw. keine Dampfeinblasung erfolgen muss, da durch den Kreislaufprozess der im Wannenteil enthaltene Flüssigkeitsvorrat ausreicht, den Garvorgang abzuschließen. Die beiden Raumbereiche müssen dabei offensichtlich nicht gegeneinander hermetisch abgedichtet sein.

Das Gesagte gilt analog für die erfindungsgemäße Anordnung zum Dampfgaren mit einem Dampfgarer in der oben beschriebenen Art und einem Backofen mit einer getrennt schaltbaren Unterhitze-Heizeinrichtung, die sich für den Einsatz des erfindungsgemäßen Garvorgangs eignet.

Gemäß einer bevorzugten Ausführungsform ist, um eine bessere Wärmeübertragung des Dampfgarers zu erreichen, die dem Backofenboden zugewandte Seite des Wannenteils zur Vergrößerung einer wärmeaufnehmenden Fläche strukturiert ausgeführt.

Gemäß einer weiteren bevorzugten Ausführungsform ist zur vereinfachten Abteilung der beiden Raumbereiche im Backofen die Halteeinrichtung als zwei an gegenüberliegenden Seiten des Wannenteils angeordnete Führungsschienen ausgestaltet, die auf entsprechende in den Backofen-Seitenwandungen ausgebildete bzw. dort angeordnete Trageelemente aufgeschoben werden können. Bevorzugt ist dabei weiterhin, dass als Führungsschienen ein nach außen abgewinkelter Rand des Wannenteils dient, wodurch eine einfach gestaltete Halteeinrichtung für den Dampfgarer erreicht wird. Gleichzeitig lässt sich hierdurch das Wannenteil alternativ zum Dampfgarvorgang auch für einen Bratvorgang einsetzen, bei dem das Lebensmittel dann direkt im Wannenteil ohne Flüssigkeitsvorrat angeordnet ist.

Gemäß einer weiteren bevorzugten Ausführungsform ist das Garbehältnis des Dampfgarers zweiteilig ausgelegt mit einem zusätzlichen wärmeisolierenden Deckel, der ein geneigtes Deckeldach besitzt. Durch diese Auslegung wird gewährleistet, dass der aus dem Flüssigkeitsvorrat im Wännentell erzeugte Dampf am wärmeisollerenden und damit kälteren Deckel weitgehend kondensiert, wobei die Deckelneigung dafür sorgt, dass das Kondensat entlang der Garbehältniswandung schnell und zuverlässig in den Flüssigkeitsvorrat zurück geführt wird.

Gemäß einer weiteren bevorzugten Ausführungsform ist im Randbereich des Wannenteils umlaufend eine Absenkung vorgesehen, in der der Deckel sicher gehalten wird.

Der Deckel kann zumindest eine Dampfaustrittsöffnung aufweisen, um den Dampfgarvorgang im Dampfgarer drucklos zu gestalten, so dass auf eine komplizierte Überdruckeinrichtung im Garbehältnis verzichtet werden kann. Daher reicht das Einfüllen einer Mindestmenge von Wasser in die Wanne von z.B. 500 - 750 ml, um den Dampfgarvorgang sicher durchführen zu können. Am Ende des Dampfgarvorgangs nicht verbrauchtes Wasser bleibt in der Wanne übrig und kann einfach entsorgt werden.

Zum Dampfaustritt dienen dabei vorzugsweise Öffnungen im Deckel und / oder im Wannenteil. Der Deckel ist dabei vorzugsweise mit einem haubenförmigen Deckeldach versehen, das auf vier Glasplatten angeordnet ist, die als Seitenwände dienen, wobei die Glasplatten an den Ecken mit Leisten verbunden sind, die gegenüber der Höhe der Glasplatten verkürzt sind, so dass Öffnungen entstehen, durch die Dampf zwischen Wannenteil und Deckel austreten kann.

Erfindungsgemäß ist die Anordnung zum Dampfgaren so ausgelegt, dass der Backofen eine getrennt schaltbare Unterhitze-Heizeinrichtung im Bodenbereich aufweist. Durch die Verwendung lediglich der Unterhitze beim Dampfgaren ist ein optimaler Garprozess gewährleistet. Weiter kann eine Backofensteuerung vorgesehen sein, mit einer Einstellmöglichkeit "Dampfgaren", bei der sich durch entsprechende Steuerung der Unterhitze-Heizeinrichtung eine Solltemperatur für den Backofen von 130° bis 170° C, vorzugsweise 150° C einstellen lässt. Mit dieser Auslegung wird gewährleistet, dass im vom Boden des Backofen beabstandeten Wannenteil zuverlässig eine Temperatur von über. 100° C erreicht wird, um den Verdampfungsprozess sicher zu stellen. Bevorzugt ist hierbei, den Backofen ohne Dampfgarer mit einer Vorheizphase von vorzugsweise 10 bis 15 min. im Bereich der oben genannten Solltemperatur zu betreiben, um ein Temperaturgefälle im Backofen herzustellen, bei dem sich im Bodenbereich des Backofens im Wesentlichen die Solltemperatur einstellt, so dass beim Einschieben des Dampfgarers die Dampferzeugung und damit der Garvorgang schlagartig einsetzt.

Die Erfindung wird anhand der beigefügten Zeichnungen näher erläutert. Es zeigen:
Fig. 1 a-c eine Ausführungsform eines erfindungsgemäßen Dampfgarers, wobei Fig. 1 a eine Explosionsdarstellung des Dampfgarers, Fig. 1 b einen Querschnitt durch ein Wannenteil und Fig. 1 c einen Querschnitt durch eine auf ein Seitenteil eines Deckels aufgesteckte Dichtleiste darstellen, und
Fig. 2 eine erfindungsgemäße Ausführungsform einer Dampfgaranordnung, wobei Fig. 2 a einen Backofen in Frontansicht mit eingeschobenem Dampfgarer und Fig. 2 b den Backofen mit dem Dampfgarer in Seitenansicht darstellt.

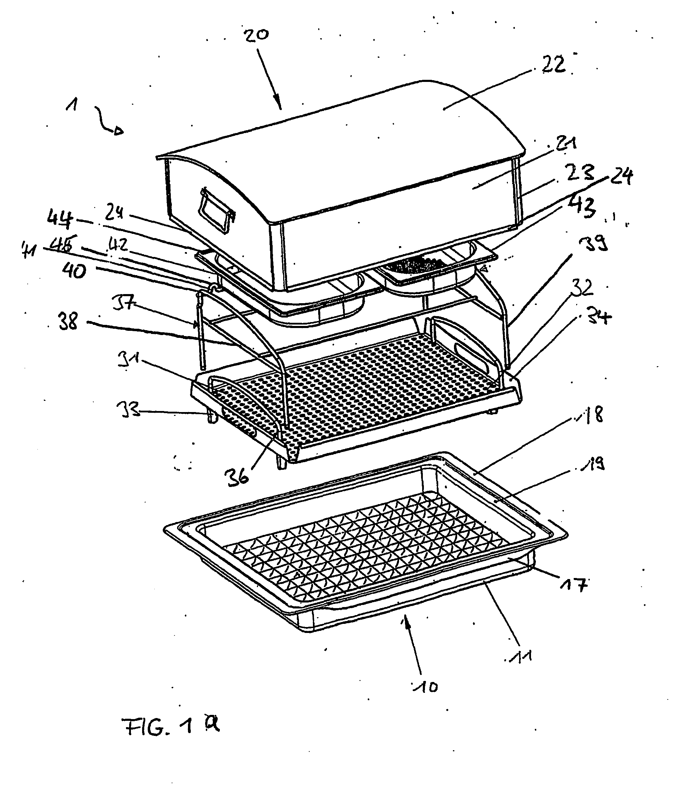

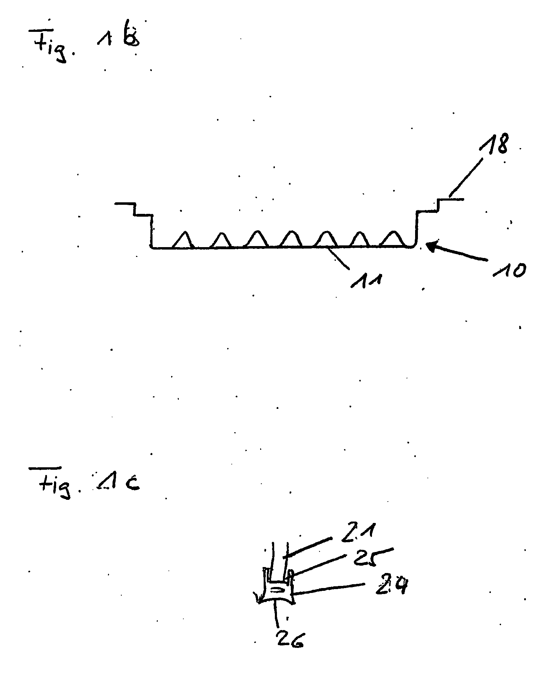

Der in Figur 1 dargestellte Dampfgarer weist ein Garbehältnis 1 mit einem Wannenteil 10 und einem Deckel 20 auf. Das Wannenteil 10 dient zur Aufnahme eines Flüssigkeitsvorrats, insbesondere von Wasser, und weist, wie der Querschnitt in Fig. 1 b zeigt, einen Boden 11 auf, der vorzugsweise waffelförmig ausgestaltet ist. Durch diese waffelförmige Ausgestaltung wird eine vergrößerte Boden- und damit wärmeaufnehmende Fläche erreicht, wodurch eine verbesserte Wärmeabsorption des Wannenteils gewährleistet wird. Alternativ zu einer Waffelstruktur besteht auch die Möglichkeit, eine anders geartete Wölbungsstruktur im Boden des Wannenteils 10 vorzusehen, um eine solche vergrößerte wärmeaufnehmende Oberfläche zu erreichen. Weiterhin ist der Boden 11 des Wannenteils 10 vorzugsweise aus einem hochwärmeleitenden Material hergestellt, wodurch die Wärmeaufnahme weiter verbessert wird. Der Boden 11 des Wannenteils 10 ist dabei dunkel ausgeführt und wirkt so als schwarzer Strahler, wodurch die Wärmeabsorption gesteigert wird.

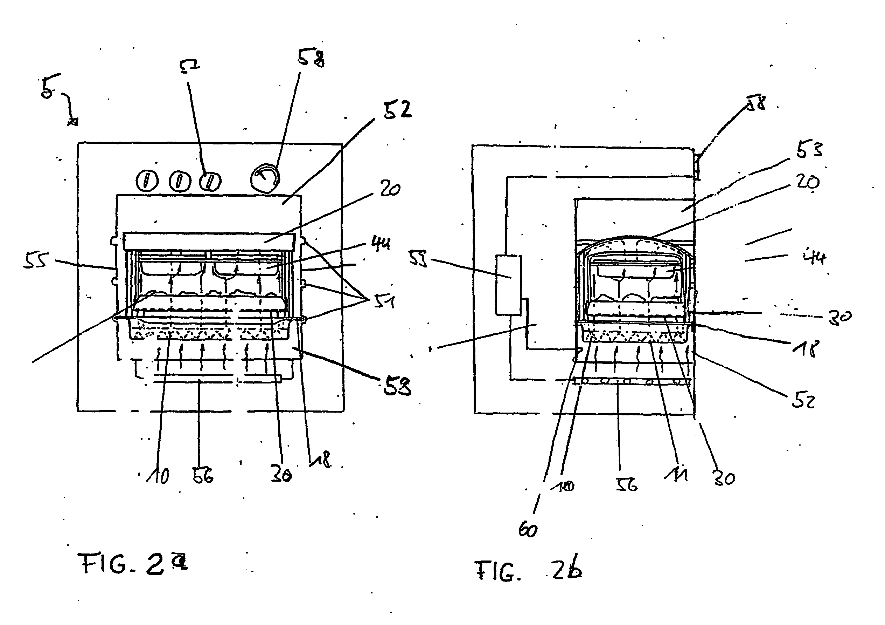

Ein umlaufender Rand 18 des Wannenteils 11 ist allseitig senkrecht nach außen abgewinkelt, wobei der Rand 18 zweistufig ausgelegt ist, so dass in einer dem Hohlraum im Wannenteil zugewandten Seite allseitig eine Absenkung 19 ausgebildet ist, die als Auflage und Dichtfläche für den Deckel 20 dient. Der Rand 18 ist dabei an den beiden Schmalseiten des im Wesentlichen rechteckigen Wannenteils 11 vorzugsweise verbreitert ausgeführt, um als Halteelemente zu dienen, die sich auf entsprechende Trageelemente in einem Backofen aufsetzen bzw. aufschieben lassen. Diese Trageelemente können, wie in der Ausführungsform in Figur 2 gezeigt, Einschubrillen 51 an einer Backofenwandung 55 sein, in die sich das Wannenteil 10 mit seinem verbreiterten Rand 18 einschieben lässt. Statt solcher Einschubrillen 51 können jedoch zum Tragen des Wannenteils 10 in seinem verbreiterten Randbereich 18 auch Tragegestelle, z.B. Teleskopauszüge im Backofen 5 verwendet werden.

An den Langseiten des Rands 18 ist, wie Fig. 1 a zeigt, weiterhin eine vorzugsweise senkrecht nach unten anstehende Abkantung 17 vorgesehen, die als Handgriff dient, um das Garbehältnis am Wannenteil auf einfache Weise aus dem Backofen ziehen zu können. Die Gesamtfläche des Wannenteils 10 des Garbehältnisses 1 entspricht vorzugsweise der Bodenfläche des Backofens 5, so dass bei eingeschobenem Garbehältnis 1 das Wannenteil 10 den Backofen 5 in zwei im Wesentlichen voneinander getrennte Raumbereiche 52, 53 unterteilt, wie in Fig. 2 gezeigt ist.

Im Wannenteil 10 des Garbehältnisses 1 ist ein durch Füße 33 beabstandeter Dampfeinsatz 30 vorgesehen. Dieser Dampfeinsatz 30 ist vorzugsweise aus Kunststoff oder Edelstahl gefertigt und hat ein waagrechtes Auflageblech 31, das mit einer matrixförmig ausgeführten Anordnung von Durchtrittslöchern 32 versehen ist, durch die Dampf durchtreten kann. Auf diesem Auflageblech 31 kann das Gargut angeordnet werden. Die große durchgehende Fläche des Auflagebteches 31 ermöglicht es, hier auch große Lebensmittel zu garen. Das Auflageblech 31 ist an seinen Rändern 34 hochgezogen, um zu gewährleisten, dass das Gargut beim Herausnehmen bzw. Einführen des Dampfeinsatzes 30 in das Wannenteil 10 nicht vom Auflageblech 31 rutschen kann. Um zu gewährleisten, dass der am Dampfeinsatz 30 bzw. am Gargut kondensierende Dampf in den Flüssigkeitsvorrat im Wannenteil 10 zurückfließen kann, ist der Rand 34 seitlich durchbrochen. Zur einfachen Handhabung des Dampfeinsatzes 30, insbesondere zum Einsetzen und Herausnehmen aus dem Wannenteil 10, sind an den Schmalseiten weiterhin Bügelgriffe 36 vorgesehen. Die Höhe der Füße 33 am Auflageblech 31 ist so abgestimmt, dass sich zwischen dem Auflageblech 31 und dem Boden 11 des Wannentells 10 ein Hohlraum ergibt, der die Aufnahme von wenigstens einem Liter Flüssigkeit erlaubt, was zum Dampfgaren auch von schwerem und voluminösem Gargut ausreicht.

Auf dem Dampfeinsatz 30 kann mit Hilfe eines Tragegestells 37 eine zweite Garebene hergestellt werden. Das Tragegestell 37 weist dabei vorzugsweise einen aus vier Rohren gebildeten waagrechten Rahmen 38 auf, der von vier senkrechten am Rahmen angeordneten Rohren 39 getragen wird. Diese Rohrfüße 39 lassen sich vorzugsweise in die Dampfdurchtrittslöcher 32 im Auflageblech 31 des Dampfeinsatzes 30 einsetzen. An den Schmalseiten des Rahmens 38 sind jeweils seitlich Bügelgriffe 40 vorgesehen, mit denen sich das Tragegestell 37 einfach handhaben lässt. Die Bügelgriffe 40 sind weiterhin vorzugsweise über eine Ober dem Rahmen angeordnete Querstrebe 41 verbunden, auf die sich ein nach außen abgewinkelter Rand 42 eines Garbehälters 43, der mit seinem Boden vom Rahmen 38 des Gestells 37 getragen wird, aufsetzen lässt. Bei der gezeigten Ausführungsform lassen sich auf dem Gestell 37 nebeneinander zwei Garbehälter 43 anordnen, wobei ein sicherer Halt dieser Garbehälter durch zwei Höcker 45 gewährleistet wird, in die eine am Garbehälter 41 angeordnete Aussparung 44 eingreifen kann.

Der Deckel 20 des Garbehältnisses 1 setzt sich aus vier jeweils aus einer Glasplatte bestehenden Seitenwänden 21 zusammen, auf denen einen nach zwei Seiten abfallendes haubenförmiges Deckeldach 42 angeordnet ist. Die aus Glas bestehenden oder alternativ aus Pressglas oder PSU-ähnlichem Kunststoff gefertigten Seitenwände 21 des Deckels sind durch Leisten 23 miteinander verbunden. Diese vorzugsweise aus Metall gefertigten Leisten 23 sind dabei etwas kürzer als die Seitenwände 21 ausgestaltet, so dass sich bei in die Absenkung 19 am Wannenteil 10 eingesetzten Deckel 20 Öffnungen ergeben, durch die Dampf aus dem Garbehältnis 1 entweichen kann. Diese Öffnungen dienen dazu, das Garbehältnis während des Garvorgangs drucklos zu halten, wodurch auf eine aufwändige Überdruckventileinrichtung verzichtet werden kann. Die Dampföffnungen können jedoch auch an jeder beliebigen anderen Stelle des Deckels 20 bzw. im oberen Bereich des Wannenteils 10 angeordnet sein.

Am unteren Rand der Seitenwände 21 ist weiterhin jeweils eine Dichtleiste 24 aufgesetzt, die die Eckleisten 23 freilässt. Ein Querschnitt durch diese auf die Seitenwinde 21 des Deckels 20 aufgesetzten Dichtleisten 24 ist in Fig. 1 c gezeigt. Die Dichtleiste 24 ist dabei so ausgebildet, dass sie eine U-förmige Aufnehmung 25 mit im Wesentlichen der Breite der Seitenwand zum Aufstecken auf diese Seitenwand 21 und eine untere, vorzugsweise leicht konkav geformte plane Dichtfläche 26, die bei aufgesetztem Deckel 20 auf der Absenkung 19 am Wannenteil 10 aufsitzt und durch das Eigengewicht des Deckels 20 für eine zuverlässige Abdichtung sorgt, so dass im Eckleistenbereich Dampfaustrittsöffnungen verbleiben. Alternativ besteht auch die Möglichkeit, den Deckel als Formteil z.B. aus einem durchsichtigen Kunststoff zu fertigen, wobei die Endüftungäausnehrhungen dann an beliebiger Stelle integriert sein können.

Außer den Seitenwänden 21 kann auch das haubenförmige Deckeldach 22 aus Glas gefertigt sein, wodurch sich eine gute Sicht auf das Gargut während des Dampfvorgangs ergibt. Alternativ besteht jedoch auch die Möglichkeit, den Deckel 20 aus einem anderen Material, das vorzugsweise jedoch ähnlich wärmeisolierend wie Glas sein soll, zu fertigen, wobei dann ein Guckloch zur Sicht auf das Gargut in der Seitenwand bzw, im Deckel vorgesehen ist, das vorzugsweise die Form eines Auges hat, um einen vergrößerten Sichtwinkel herzustellen. Alternativ zu einem sich nach zwei Seiten neigenden haubenförmigen Deckel besteht auch die Möglichkeit, den Deckel in Form eines Pultdachs auszugestalten bzw. mit jeder beliebigen anderen Dachform, bei der das Deckeldach geneigt ist, um den kondensierenden Dampf zu den Seitenwänden abzuleiten.

Der Garvorgang, mit dem in Fig. 1 dargestellten Dampfgarer wird im Folgenden anhand von Fig. 2 erläutert. Zum Dampfgaren wird das Wannenteil 10 des Garbehältnisses 1 mit einem Flüssigkeitsvorrat befüllt, wobei die Flüssigkeitsmenge zwischen 500 und 1000 ml beträgt. Zur verbesserten Handhabung kann hierfür eine Strichmarkierung am Wannenteil 10 vorgesehen sein, die die Höhe der eingefüllten Flüssigkeitsmenge angibt. Dann wird der mit dem Gargut versehene Dampfeinsatz 30 in das Wannenteil 10 des Garbehältnisses 1 eingesetzt und ggf eine zweite Gargutebene durch das Gestell 37 mit den Garbehältem 43, die ebenfalls Gargut enthalten können, ausgebildet. Anschließend wird dann der Deckel 20 auf das Wannenteil 10 aufgesetzt, um das Garbehältnis 1 zu verschließen. Gleichzeitig wird der Backofen 5 vorgeheizt. Der Backofen kann dabei ein herkömmlicher Backofen sein mit einer unter dem Boden angeordneten, getrennt schaltbaren Unterhitze-Heizeinrichtung 56.

Diese Unterhitze-Heizeinrichtung 56 wird dann auf eine Solltemperatur zwischen 130° C und 170°. C vorzugsweise auf 150° C eingestellt und 10 bis 15 min. vorgeheizt, so dass sich im Backraum ein Temperaturgefätte ergibt, wobei im Bereich der untersten Einschubebene, in der das Wannenteil 10 mit seinem verbreiterten Rand 18 eingeschoben wird, eine Temperatur von ca. 150° C ergibt. Nach dieser Vorheizphase wird dann der Dampfgarer in die Backofenmuffel eingeschoben, wobei das Wannenteil 10 in die unterste Einschubebene eingesetzt wird und den Backofen in zwei im Wesentlichen voneinander getrennte Raumbereiche, den Raumbereich 52 mit dem Boden des Wannenteils 10 und den Raumbereich 53 mit dem Deckel 20 aufteilt. Durch die Vorheizphase wird erreicht, dass der wärmeleitende Boden 11 des Wannenteils 10 mit dem Flüssigkeitsvorrat im Wesentlichen sofort auf 100° C aufgeheizt wird, wodurch sofort ein Verdampfen einsetzt. Dieser Dampf steigt dann selbsttätig auf und tritt durch die Dampfdurchtrittslöcher 32 des Dampfeinsatzes 30 hindurch, umströmt das auf diesem liegende Gargut und das in der darüber liegenden zweiten Garebene in den Garbehältern 44 angeordnete Gargut, um dieses dampfzugaren.

Auf den kühleren Oberflächen des Gargutes kondensiert der Dampf dann teilweise und tropft zurück in das Wannenteil 10, der übrige Dampf steigt bis zum Deckeldach 22 auf und kondensiert hier, wird dann im wesentlichen entlang der Seitenwände 21 des Deckels 20 in das Wannenteil 10 zurück geführt. Ein kleiner Teil des Dampfes entweicht weiterhin durch die Dampföffnungen im Deckel 20 in den oberen Raumteil 53 der Backofenmuffel, wobei dieser Dampfaustritt so angelegt ist, dass bei einem Garprozess mit einer Solltemperatur von 130° C bis 170° C, vorzugsweise 150° C ein Garvorgang bis 1,5 Stunden möglich ist, ohne dass der gesamte Flüssigkeitsvorrat aus dem Dampfgarer verdampft und in die Backofenmuffel entwichen ist.

In Fig. 2 a ist der Garvorgang mit in dem Backofen eingeschobenen Dampfgarer in Frontansicht und in Figur 2 b in einem seitlichen Querschnitt gezeigt. Bei der dargestellten Ausführung ist neben den herkömmlichen Stellknöpfen 57 für den Backofen ein zusätzlicher Stellknopf 58 für eine Dampfgareinstellung vorgesehen. Mit dieser Dampfgareinstellung kann vorzugsweise die Art des Garguts voreingestellt werden, so dass die Dampfgareinstellung dann automatisch die Länge des Garvorgangs an dieses Gargut anpasst. Alternativ kann jedoch auch vorgesehen sein, die Länge des Garvorgangs manuell durch eine Zeituhr einzustellen. Eine Dampfgarüberwachung 59 kann weiterhin so ausgelegt sein, dass sie nach Ende des Vorheizvorgangs ein akustisches oder optisches Signal gibt, um dem Bediener anzuzeigen, dass er nun den Dampfgarer in den Backofen einführen soll, um den Garvorgang einzuleiten.

Zur Überwachung der Solltemperatur ist die Dampfgarüberwachung 59 an einen Temperatursensor 60 In der Backofenmuffel, der vorzugsweise unterhalb der untersten Einschubebene angeordnet ist, angeschlossen, um die Temperatur zu messen und die Heizleistung der Unterhitze-Heizeinrichtung' 56 entsprechend einzustellen. Das Ende der Dampfgarphase kann dann wiederum durch ein akustisches oder optisches Signal von der Dampfgarüberwachung 59 dem Benutzer angezeigt werden. Weiterhin kann die Dampfgarüberwachung so ausgelegt sein, dass dann automatisch die Unterhitze-Heizeinrichtung 56 abgeschaltet wird.

## Patentansprüche

1. Dampfgarer zum Dampfgaren von Gargut, umfassend ein in einen Backofen verbringbares Garbehältnis (1), das ein Wärme leitendes Wannenteil (10) zur Aufnahme eines Flüssigkeitsvorrates und einen auf dem Wannenteil (10) angeordneten Dampfeinsatz (30) mit Lochplatte (31) und Griffen (36) zur Handhabung zur Aufnahme von Gargut sowie einen Deckel aufweist, um mithilfe einer Heizeinrichtung im Bodenbereich eines Backofens (5) aus dem Flüssigkeitsvorrat im Wannenteil (10) Dampf zu erzeugen, der das Gargut auf dem Dampfeinsatz (30) umströmt,
**dadurch gekennzeichnet, dass**
das Wannenteil (10) des Garbehältnisses (1) eine seitliche Halterung (18) aufweist, um das Wannenteil (10) und damit das Garbehältnis (1) vom Boden des Ofens beabstandet in an den Seitenwänden des Ofens (5) vorhandenen Tragelementen anzuordnen, sodass **dadurch** der Garraum des Ofens (5) in zwei im Wesentlichen getrennte Raumbereiche (52/53) aufgeteilt wird, dass die dem Backofenboden zugewandte Seite (11) des Wannenteils (10) dunkel ausgeführt ist und dass der Dampfeinsatz (30) Füsse (33) zum Abstellen auf dem Boden des Wannenteils (10) aufweist.

2. Dampfgarer nach einem der vorhergehenden Ansprüche,
**dadurch gekennzeichnet, dass**
die Halteeinrichtung (18) des Wannenteils (10) zwei an gegenüberliegenden Seiten des Wannenteils angeordnete Führungsschienen zur Aufnahme in entsprechende an den Backofen-Seitenwandungen ausgebildete bzw. angeordnete Trageelemente (51) umfasst.

3. Dampfgarer nach Anspruch 2,
**dadurch gekennzeichnet, dass**
ein nach außen abgewinkelter Rand (18) des Wannenteils (10) als Führungsschienen dient.

4. Dampfgarer nach der vorhergehenden Ansprüche,
**dadurch gekennzeichnet, dass**
ein wärmeisolierender Deckel (20) vorgesehen ist, der auf dem Wannenteil aufsitzt und ein geneigtes Deckeldach (22) besitzt

5. Dampfgarer nach Anspruch 4,
**dadurch gekennzeichnet, dass**
im Randbereich (18) des Wannenteils umlaufend eine Absenkung (19) zur Aufnahme des Deckels (20) ausgebildet ist.

6. Dampfgarer nach Anspruch 4 oder 5
**dadurch gekennzeichnet, dass**
im Deckel (20) wenigstens eine Dampfaustrittsöffnung vorgesehen ist.

7. Dampfgarer nach Anspruch 6,
**dadurch gekennzeichnet, dass**
der Deckel (20) ein haubenförmiges Deckeldach (22) aus Glas aufweint, das aus vier Glasplatten angeordnet ist, die als Seitenwände (21) des Deckels dienen, wobei die Glasplatten an den Ecken über Leisten (23) miteinander verbunden sind, die gegenüber der Höhe der Glasplatten verkürzt sind, um Dampfaustrittsöffnungen zwischen dem Wannenteil (10) und dem Deckel (20) zu bilden.

8. Dampfgarer nach Anspruch 7
**dadurch gekennzeichnet, dass**
am unteren Rand der Glasplatten (21) des Deckels (20) jeweils eine Dichtungsleiste (24) angeordnet ist, die eine U-förmige Aufnahme (25) zum Aufstecken auf den Glasrand und eine der U-förmigen Aufnahme gegenüberliegende Dichtfläche (26) zum Aufliegen auf dem Wannenteil (10) besitzt.

9. Anordnung zum Dampfgaren mit einem Dampfgarer nach einem der vorhergehenden Ansprüche und einem Backofen (5), der eine getrennt schaltbare Unterhitze-Einrichtung (56) in einem Bodenbereich aufweist.

10. Anordnung zum Dampfgaren nach Anspruch 9,
**dadurch gekennzeichnet, dass**
am Backofen (5) eine Backofensteuerung (59) mit der Einstellung "Dampfgaren" vorgesehen ist, bei der eine Solltemperatur für den Backofen von 130° C bis 170°C, vorzugsweise 150° C eingestellt ist.

11. Anordnung zum Dampfgaren nach Anspruch 10,
**dadurch gekennzeichnet, dass**
die Einstellung "Dampfgaren" eine Vorheizphase ohne Dampfgarer mit einer Zeitdauer von vorzugsweise 10 min bis 15 min umfasst.

12. Anordnung zum Dampfgaren nach Anspruch 10 oder 11,
**dadurch gekennzeichnet, dass**
die Einstellung "Dampfgaren" eine Garphase mit Dampfgarer umfasst, deren Zeitdauer entsprechend dem Gargut einstellbar ist.

## Claims

1. Steam cooker for steam cooking of cooking stock, comprising a cooking container (1), which can be introduced into a baking oven and which comprises a heat-conducting trough part (10) for reception of a liquid reserve and a steam insert (30), which is arranged on the trough part (10), with a perforated plate (31) for reception of stock to be cooked and handles (36) for handling as well as a cover, in order to produce steam, which flows around the cooking stock on the steam insert (30), from the liquid reserve in the trough part (10) with the help of a heating device in the base region of a baking oven (5), **characterised in that** the trough part (10) of the cooking container (1) has a lateral mount (18) in order to arrange the trough part (10) and thus the cooking container (1) at a spacing from the base of the oven in support elements present at the side walls of the oven (5) so that the cooking space of the oven (5) is thereby divided up into two substantially separate space regions (52/53), that the side (11) of the trough part (10) facing the baking oven base is executed to be dark and that the steam insert (30) has feet (33) for setting down on the base of the trough part (10).

2. Steam cooker according to the preceding claim, **characterised in that** the mounting device (18) of the trough part'(2) comprises two guide rails, which are arranged at opposite sides of the trough part, for reception in corresponding support elements (51) constructed or arranged at the baking oven side walls.

3. Steam cooker according to claim 2, **characterised in that** an outwardly angled edge (18) of the trough part (10) serves as guide rails.

4. Steam cooker according to one of the preceding claims, **characterised in that** a thermally insulating cover (20), which is seated on the trough part and has a suitable cover roof (22), is provided.

5. Steam cooker according to claim 4, **characterised in that** a recess (19) for reception of the cover (20) is formed in the edge region (18) of the trough part to be encircling.

6. Steam cooker according to claim 4 or 5, **characterised in that** at least one steam outlet opening is provided in the cover (20).

7. Steam cooker according to claim 6, **characterised in that** the cover (20) comprises a hood-shaped cover roof (22) of glass, which is arranged from four glass plates serving as side walls (22) of the cover, wherein the glass plates are connected together at the corners by way of strips (23) which are shortened relative to the height of the glass plates in order to form steam outlet openings between the trough part (10) and the cover (20).

8. Steam cooker according claim 7, **characterised in that** arranged at the lower edge of each of the glass plates (21) of the cover (20) is a respective sealing strip (24) which has a U-shaped receptacle (25) for plugging onto the glass edge and a sealing surface (27), which is opposite the U-shaped receptacle, for resting on the trough part (20).

9. Arrangement for steam cooking with a steam cooker according to one of the preceding claims and a baking oven (5), which has a separately switchable lower-heat device (56) in a base region.

10. Arrangement for steam cooking according to claim 9, **characterised in that** provided at the baking oven (5) is a baking oven control (59) with the setting "steam cooking", at which a target temperature for the baking oven of 130° C to 170° C, preferably 150° C, is set.

11. Arrangement for steam cooking according to claim 10, **characterised in that** the setting "steam cooking" comprises a preheating phase without steam cooking with a time duration of preferably 10 minutes to 15 minutes.

12. Arrangement for steam cooking according to claim 10 or 11, **characterised in that** the setting "steam cooking" comprises a cooking phase with steam cooking, the time duration of which is settable in correspondence with the stock to be cooked.

## Revendications

1. Cuiseur à vapeur destiné à la cuisson à la vapeur d'aliments à cuire, comprenant un récipient de cuisson (1) pouvant être mis dans un four de cuisson, ce récipient de cuisson présentant une partie en cuve (10) conductrice de chaleur, destinée à loger une réserve de liquide, et un élément de vapeur (30) disposé sur la partie en cuve (10), comprenant une plaque perforée (31) pour loger les aliments à cuire, et des poignées (36) pour la manipulation, ainsi qu'un couvercle, afin de générer de la vapeur à l'aide d'un dispositif de chauffage dans la partie de fond d'un four de cuisson (5) à partir de la réserve de liquide dans la partie en cuve (10), la vapeur entourant l'aliment à cuire posé sur l'élément de vapeur (30),
**caractérisé en ce que**
la partie en cuve (10) du récipient de cuisson (1) présente un support latéral (18) afin de disposer la partie en cuve (10), et donc le récipient de cuisson (1), à écart du fond du four dans des éléments porteurs présents sur les parois latérales du four (5), de sorte qu'ainsi l'espace de cuisson du four (5) est divisé en deux parties d'espace (52/53) essentiellement séparées, que le côté (11), tourné vers le fond du four de cuisson, de la partie en cuve (10) est foncée et que l'élément de vapeur (30) présente des pieds (33) pour sa pose sur le fond de la partie en cuve (10).

2. Cuiseur à vapeur selon la revendication 1,
**caractérisé en ce que**
le dispositif de support (18) de la partie en cuve (10) comprend deux rails de guidage disposés sur des côtés opposés de la partie en cuve pour leur logement dans des éléments porteurs (51) correspondant disposés, resp. formés, sur des parois latérales du four.

3. Cuiseur à vapeur selon la revendication 2,
**caractérisé en ce qu'**
un bord (18) plié vers l'extérieur, de la partie en cuve (10), sert de rails de guidage.

4. Cuiseur à vapeur selon l'une quelconque des revendications précédentes,
**caractérisé en ce qu'**
un couvercle calorifuge (20) est ménagé, qui repose sur la partie en cuve et possède un toit de couvercle (22) incliné.

5. Cuiseur à vapeur selon la revendication 4,
**caractérisé en ce qu'**
un abaissement (19) destiné au logement du couvercle (20) est formé de manière contournante dans la partie de bord (18) de la partie en cuve.

6. Cuiseur à vapeur selon la revendication 4 ou 5,
**caractérisé en ce qu'**
au moins un orifice de sortie de vapeur est ménagé dans le couvercle (20).

7. Cuiseur à vapeur selon la revendication 6,
**caractérisé en ce que**
le couvercle (20) présente un toit de couvercle (22) en forme de calotte en verre, qui est disposé sur quatre plaques de verre servant de parois latérales (21) du couvercle, les plaques en verre étant reliées entre elles aux coins par l'intermédiaire de baguettes (23) raccourcies par rapport à la hauteur des plaques de verre afin de former des orifices de sortie de vapeur entre la partie en cuve (10) et le couvercle (20).

8. Cuiseur à vapeur selon la revendication 7,
**caractérisé en ce qu'**
une baguette d'étanchéité (24) est respectivement disposée sur le bord inférieur des plaques de verre (21) du couvercle (20), cette baguette d'étanchéité possédant un logement (25) en forme de U pour la pose sur le bord de verre et une surface d'étanchéité (26) opposée au logement en forme de U, pour la pose sur la partie en cuve (10).

9. Dispositif de cuisson à la vapeur, comprenant un cuiseur à vapeur selon l'une quelconque des revendications précédentes et un four de cuisson (5) présentant un dispositif de chauffage inférieur (56), commutable séparément, dans une partie de fond.

10. Dispositif de cuisson à vapeur selon la revendication 9,
**caractérisé en ce qu'**
une commande de four de cuisson (59) ayant le réglage « cuisson à la vapeur » est ménagée sur le four de cuisson (5), une température désirée étant réglée pour le four de cuisson de 130° à 170°C, de préférence de 150°C.

11. Dispositif de cuisson à vapeur selon la revendication 10,
**caractérisé en ce que**
le réglage « cuisson à la vapeur » comprend une phase de préchauffage sans cuiseur à la vapeur, avec une durée de préférence de 10 min à 15 min.

12. Dispositif de cuisson à vapeur selon la revendication 10 ou 11,
**caractérisé en ce que**
le réglage « cuisson à la vapeur » comprend une phase de cuisson avec cuiseur à la vapeur, dont la durée est réglable en fonction de l'aliment à cuire.
